# EUROPEAN PATENT APPLICATION

(11) **EP 1 418 756 A2**
(43) Date of publication of application: **12.05.2004**
(21) Application number: 03104017.3
(22) Date of filing: 29.10.2003
(51) Int. Cl.: H04N 7/167, H04N 7/16

(54) **Method and system for encrypting material for distribution**

(30) Priority: 29.10.2002 US 284049
(71) Applicant: General Instruments, Motorola Inc, Horsham PA 19044 (US)
(72) Inventor: Chen, Annie On-yee, 92014, Del Mar (US); Tang, Lawrence W, 92128, San Diego (US); Murphy, Patrick, 92123, San Diego (US); Okimoto, John I, 92128, San Diego (US); Cochran, Keith R., San Diego 92108 (US); Hutchings, George T, 18901, Doylestown (US)
(74) Representative: McCormack, Derek James

(57) **Abstract**

Streaming content is encrypted by segmenting the content into a plurality of crypto periods, and by encrypting the content for each of a plurality of crypto periods with a different cryptographic key. The crypto periods may be based on either (i) fixed time intervals, (ii) a fixed number of packets, (iii) a fixed marker count, or (iv) a pseudo random number of packets. Methods are provided for determining how to record the key changing criteria, and how to convey this information to video on demand (VOD) servers.

## Description

### TECHNICAL FIELD OF THE INVENTION

The invention relates to a method and a system for encrypting material such as video material for distribution. In particular, it relates conditional access and copy protection techniques, and more particularly to such techniques for interactive, on-demand digital program content such as video-on-demand (VOD) programming distributed via cable and satellite networks.

### BACKGROUND

Recent advances in cable and satellite distribution of subscription and "on-demand" audio, video and other content to subscribers have given rise to a growing number of digital set-top boxes (sometimes referred to as Digital Consumer Terminals or "DCTs") for decoding and delivering digitally broadcast programming. These set-top boxes often include additional circuitry to make them compatible with older analog encoding schemes for audio/video distribution. As the market for digital multimedia content of this type grows and matures, there is a corresponding growth of demand for new, more advanced features.

Video-on-demand (hereinafter VOD) and audio-on-demand are examples of features made practical by broadband digital broadcasting via cable and satellite. Unlike earlier services where subscribers were granted access to scheduled encrypted broadcasts (e.g., movie channels, special events programming, pay per view purchases, etc.), these on-demand services permit a subscriber to request a desired video, audio or other program at any time and to begin viewing the content at any point therein. Upon receiving the request for programming (and, presumably, authorization to bill the subscriber's account), the service provider then transmits the requested program to the subscriber's set-top box for viewing/listening. The program material is typically "streamed" to the subscriber in MPEG format for immediate viewing/listening, but can also be stored or buffered in the set-top box (typically on a hard-disk drive or "HDD") for subsequent viewing/listening.

The Motion Picture Association of America (hereinafter MPAA) is a trade association of the American film industry, whose members include the industry's largest content providers (i.e., movie producers, studios). The MPAA requires protection of VOD content from piracy. Without adequate security to protect their content, its member content providers will not release their content (e.g., movies) for VOD distribution. Without up-to-date, high-quality content, the VOD market would become non-viable.

Access control methods, which may include encryption, are continually evolving to keep pace with the challenges of video-on-demand (VOD) and other consumer-driven interactive services. With VOD, headend-based sessions are necessarily becoming more personalized. In this scenario, video streams are individually encrypted and have their own set of unique keys.

One key area of concern, especially for direct content providers and movie companies, is VOD copy protection. The method by which content is produced and delivered to consumers is constantly changing. Under the newest scenarios, content delivery can occur over data backbones, satellite networks and the Internet, increasing the potential for hackers to get digitally perfect copies of the VOD content. As the VOD industry develops and adapts to the piracy threat by providing more sophisticated encryption schemes, piracy becomes more difficult, but the potential gain to the video "pirate" for achieving successful encryption breaches (successful content copying) remains a considerable attraction to hackers.

Assuming that physical security and network security measures are adequate at the movie company, the VOD encoding company and at the MSO (Multiple System Operator) or satellite operator's facilities, the primary points of VOD vulnerability to piracy occur when VOD content is transmitted over widely accessible communication networks such as a satellite channel, the Internet or a cable system. Such transmissions can occur between the movie company and the VOD encoder, between the VOD encoder and the MSO or satellite operator, and between the MSO or satellite operator and the VOD customer. Because of the ease with which such transmissions can be intercepted, these are the points where the risk of piracy is the greatest.

### SUMMARY OF THE INVENTION

According to the invention, techniques are provided to pre-encrypt VOD material with a changing cryptographic key and to convey this information to VOD servers so that the VOD servers can send out the corresponding ECMs (Entitlement Control Messages) when the encrypted content is delivered to a consumer's digital set top.

Further according to the invention, multiple encryption keys are added when pre-encrypting VOD material. More specifically, methods are provided for determining when to change encryption keys; how to record the key changing criteria, and how to convey this information to the VOD servers.

Further according to the invention, streaming content is encrypted by segmenting the content into a plurality of crypto periods, and encrypting the content for each of a plurality of crypto periods with a different cryptographic key. The crypto periods may be established as follows:
1) Fixed crypto period: Define a crypto time interval and change the key each time the crypto time-interval passes.
2) Fixed number of packets: Determine a number of content packets "n" corresponding to a suitable time interval and change the cryptographic key every "n" packets.
3) Fixed "marker" count: Using a suitable MPEG-II field type as a "marker", such as an I-frame header, change the cryptographic key every time "n" markers have passed in the stream, where "n" is selected to produce a suitable crypto period. The MPEG-II I-frame header is one example of a suitable "marker." Alternatively, any other suitable, recurring MPEG-II encoding element could be used as a stream "marker" to delimit segments of the MPEG-II stream.
4) Random crypto period: Change the crypto-period randomly within upper and lower constraints on the crypto period, using a pseudo-random algorithm. Calculate a number of packets for each crypto period and change the key after that number of packets. Generate an index file indicating at which packet numbers the encryption key should be changed.

The invention is particularly useful for generating rapidly changing encryption keys, and for methods of communicating how and when to change the keys in the context of, for example, the MediaCipher-II conditional access (CA) system available from the Broadband Communications Sector of Motorola, Inc., Horsham, Pennsylvania, USA. Motorola's MediaCipher-II system is capable of changing keys at rates (crypto periods) which are measured in fractions of a second, rather than several seconds.

### GLOSSARY

Unless otherwise noted, or as may be evident from the context of their usage, any terms, abbreviations, acronyms or scientific symbols and notations used herein are to be given their ordinary meaning in the technical discipline to which the invention most nearly pertains. The following glossary of terms is intended to lend clarity and consistency to the various descriptions contained herein, as well as in prior art documents:
- **CA**: Conditional Access. A means by which access to content is granted only if certain prerequisite conditions are met (e.g., payment of a subscription fee, time-dependent license, etc.)
- **CAS**: Conditional Access System. A means of allowing system users to access only those services that are authorized to them, comprises a combination of authentication and encryption to prevent unauthorized reception
- **CP**: Crypto Period. A period covering a portion of an encrypted stream during which a specific encryption key is valid.
- **ECM**: Entitlement Control Message. Entitlement Control Messages are private conditional access information which specify control words and possibly other, typically stream-specific, scrambling and and/or control parameters.
- **EMM**: Entitlement Management Message. Conditional access messages used to convey entitlements or keys or other parameters to users, or to invalidate or delete entitlements or keys. For example, an EMM can be used in combination with an ECM to determine an encryption key. Without the EMM, the key cannot be derived. The following categories of EMM are possible:
EMM-G: EMM for the whole audience
EMM-S: Shared EMM between the elements of a group.
EMM-U: EMM for a single client.
- **ER**: Encryption Record. Contains information about how specific program content is encrypted, and rules for decoding.
- **ERS**: Encryption Renewal System. A system by which a conditional access license is renewed.
- **Internet**: The Internet (upper case "I") is the vast collection of inter-connected networks that all use the TCP/IP protocols. The Internet now connects many independent networks into a vast global internet. Any time two or more networks are connected together, this results in an internet (lower case "i"; as in international or inter-state).
- **MPAA**: Motion Picture Association of America
- **MPEG**: Moving Pictures Experts Group
- **MPEG-II**: MPEG-2 is the standard for digital television (officially designated as ISO/IEC 13818, in 9 parts).
- **MSO**: Multiple System Operator. A company that owns multiple cable systems.
- **PCR**: Program Clock Reference. PCR information is embedded into MPEG-II streams to accurately synchronize a program clock on the receiving system to the MPEG-II stream.
- **VOD**: Video-On-Demand. The service of providing content through subscriber selection off a large menu of options, available to a viewer at any time.

Embodiments of the present invention will now be described by way of example with reference to the accompanying drawings, in which:

### BRIEF DESCRIPTION OF THE DRAWINGS

**Figure 1** is a block diagram of a system for delivering pre-encrypted video content, in accordance with the invention.

**Figure 2A** is a diagram showing a changing-key encryption scheme for pre-encrypted content using a fixed crypto period, in accordance with the invention.

**Figure 2B** is a diagram showing a changing-key encryption scheme for pre-encrypted content using a crypto period based on a fixed number of packets, in accordance with the invention.

**Figure 2C** is a diagram showing a changing-key encryption scheme for pre-encrypted content using a crypto period delimited by a fixed number of MPEG-II I-frames, in accordance with the invention.

**Figure 2D** is a diagram showing a changing-key encryption scheme for pre-encrypted content using a "random" crypto period, in accordance with the invention.

### DETAILED DESCRIPTION OF EMBODIMENTS OF THE INVENTION

The invention relates to conditional access and copy protection techniques and more particularly to such techniques for interactive, on-demand digital program content such as video-on-demand (VOD) programming distributed via cable and satellite networks.

In order to protect against interception and copying of digital program content, a pre-encryption procedure is employed whereby server-based VOD content is stored in an encrypted form, then delivered directly to viewers without further encryption processing. The VOD content is encrypted at the point where it is encoded, and is distributed to content resellers (e.g., MSO's, satellite operators, etc.) in encrypted form. Content encoders generally do not distribute directly to end-users (viewers). Typically, encryption is accomplished separately and uniquely for each reseller.

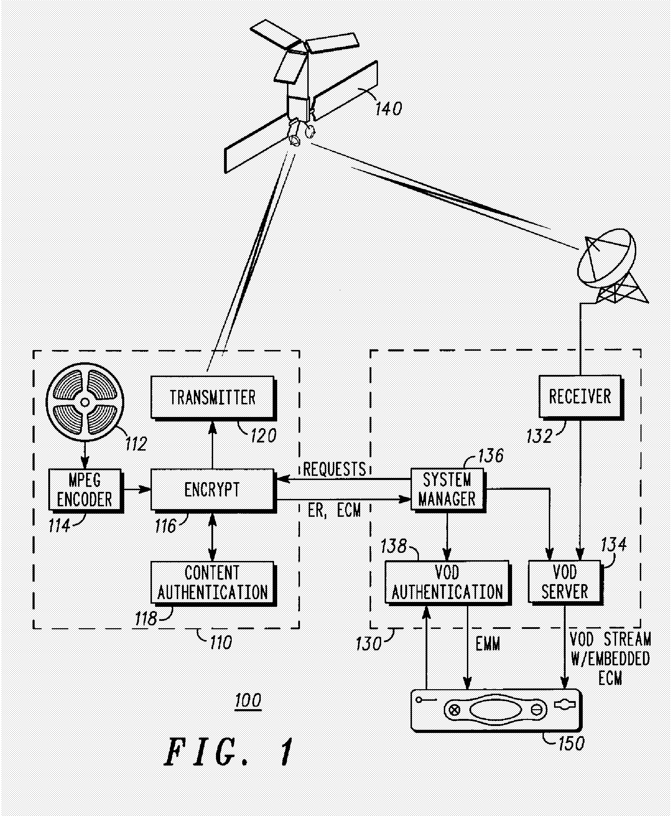

**Figure 1** is a block schematic diagram of a system 100 for delivery of pre-encrypted program content, within which an embodiment of the present invention can be incorporated. The system 100 is suitably a conditional access system (CAS) which is a system for granting conditional access to certain digital content (movies, etc.), the "conditions" being licensing conditions (fee paid, access granted starting on date xx/xx/xx at xx:xx until yy/yy/yy at yy:yy, etc.). It is noted that although the entire system 100 is not typically included in one CAS, it could be.

At a content encoder's location 110, master content 112 (e.g., movies and other program content) is encoded into digital form via a suitable (e.g., MPEG-II) encoder 114. This content is then encrypted in an encryption system 116, to be "encrypted content." A content authorization system 118 is used to, e.g., manage, renew and verify valid licensing for the encrypted content. This can permit, for example, encryption by the encryption system 116 only if valid licensing exists for any particular destination. At a minimum, system 118 will control whether encryption can occur, independently of content destination. The encryption system 116 can generate a "personalized" encryption for each destination content reseller (e.g., MSO). Such a feature is not, however, required. Instead, the same encryption process could be used for a plurality of different MSOs. The encrypted content is transmitted via a transmitter (XMIT) 120 over a suitable transmission medium 140 to a receiver 132 at a reseller's location 130. The transmission medium is shown as being a satellite, but it can be the Internet, a cable network, or any other suitable delivery mechanism.

The receiver 132 receives the encrypted content and stores it in a VOD server 134 from which it can be re-transmitted to end-users. A system manager 136 (e.g., computer system that controls operation of a reseller's various transmission and communications resources) communicates with the encryption system 116 to make requests for program content, and to receive encryption records (ER) defining how the requested program content is encrypted/encoded and to receive entitlement control messages (ECMs) associated with the encryption of the program content. Typically, the encryption system 116 and the system manager 136 are parts of an ECM Renewal System (ERS) by which authorizations to distribute/decode program content are managed and renewed. It should be appreciated, however, that the ECM renewal can be separate from the other functions included in encryption system 116. As an example, a centralized ERS can be provided. It is also noted that the System Manager 136 would typically be provided by the VOD vendor, although it may be provided by others.

At the reseller's (e.g., MSO's) location, a user authorization system 138 ("VOD Auth.") receives requests from end users for program content, and verifies that appropriate authorizations are in place for the end user to view the requested content. If the appropriate authorizations are in place, then the user authorization system 138 instructs the VOD server 134 to deliver the requested (encrypted) content to the user's VOD playback device 150 (e.g., set-top box) and generates an Entitlement Management Message (EMM) for the requested content for delivery to the VOD playback device 150, along with the requested content. In an alternate embodiment, the EMM is sent well in advance, e.g., from the CAS.

An ECM contains encryption information specific to the program content which, in combination with a valid EMM, can be used to derive a decryption key for decrypting the content. ECMs are typically embedded within the program content, and due to the encryption mechanisms employed cannot be used to derive valid encryption keys absent a valid EMM for the content. EMMs may also include conditional access information, such as information about when, how many times, and under what conditions the content may be viewed/played.

Those skilled in the art will appreciate that when the inventive concepts are used with pre-encrypted content, ECM authorizations will change over time. Thus, ECM data embedded in the content will need to be updated with "renewed" ECMs, or ECMs with authorizations based on subscriber specific rights (for example to copy one or more times). With multiple key changes in the content, the server (which "plays out" the content with the ECMs) must know when to switch ECM sets from one crypto period to the next. Several methods to accomplish this synchronization are disclosed herein. It should also be appreciated that the decoder will decrypt (if it has the proper ECMs) by looking at the transport scrambling control bits in the MPEG packet headers.

A technique that can be used to improve the security of encrypted streaming content such as VOD content is to change the cryptographic keys (encryption keys) at a plurality of points within the content. In order to make it more difficult for "pirates" to steal these keys, it is desirable to use as many different cryptographic keys as possible to encrypt one item of content. However, this creates a number of new issues:
1) Determining the number of sets of cryptographic keys that should be employed to encrypt one item of content, and determining an upper limit on how frequently keys can be changed.
2) Determining how and where, within the program content, to effect the cryptographic key changes, and how to encode those key changes.
3) Determining how to communicate the cryptographic key sets to VOD servers.
4) Determining how to synchronize cryptographic key changes with the corresponding ECMs when the content is streamed to the consumer at time of purchase..
5) Determining how to handle the ECM renewal process.

The inventive technique addresses these issues by defining a cryptographic key change methodology that permits rapid key changes with straightforward, simple key change synchronization at the time of decryption. This is accomplished, in part, by taking advantage of the MPEG-II data stream structure.

Present encryption schemes employ a simple, conventional two-key encryption technique to encrypt VOD content. Both keys taken together are essentially a single "cryptographic key set" used to encrypt the entire content. For example, symmetric (i.e., private) keys can be used for encryption. In an alternate implementation, one of the keys can comprise a "public key", and be delivered with the content. The other key is required in combination with the public key to decrypt the content, and is delivered as part of a successful authorization or licensing process. Neither key is useful absent the other key. Although a public key implementation is possible, a private key approach is currently the preferred implementation.

A problem with encrypting the VOD content with a single set of keys is that an aggressive "attack" using exhaustive cryptographic "cracking" techniques (e.g., a "brute force" approach) could discover a set of keys that will decode the content. Once broken, the content can be reproduced "in the clear" (i.e., unencrypted), thereby completely thwarting the security offered by the encryption scheme. As is well known in the art, key size is a factor in minimizing the likelihood of a successful brute force attack.

For highest security and greatest protection against cryptographic "cracking" attacks by "pirates", it is highly desirable to increase the number of separate cryptographic keys used by changing the keys at numerous points during the encryption process. The greater the number of "crypto periods" (separately encrypted segments of the content), the more difficult it becomes to "crack" the encryption scheme. If, for example, cryptographic keys were to be changed every 0.5 seconds within a VOD stream (i.e., a crypto period of 0.5 seconds), then the would-be "pirate" would be forced to crack the encryption scheme for each and every 0.5 seconds of content. Each successful breach of encryption security would only produce 0.5 seconds of "clear" (unencrypted) content. For a 90 minute movie, this would require 10,800 separate successful breaches of the encryption scheme. Given the time and effort required to accomplish each breach, this presents a formidable barrier to piracy.

The inventive technique maintains all cryptographic keys separate from the encoded/encrypted content. A set of ECMs (Entitlement Control Messages) conveying information about a set of keys is multiplexed into the VOD stream by the VOD server when delivering the VOD content to an end user's VOD playback device (e.g. set-top box). A separate EMM (Entitlement Management Message) from an authorization system is delivered to the VOD playback device. The EMM contains the remaining information required to decode/decrypt the VOD content.

There are two points in the streaming VOD delivery process that dictate the practical upper limit on how frequently keys can be changed within VOD content: the VOD server and the set-top box. Since the content can be encoded "off-line", in a non real-time fashion, there is virtually no practical limit to how frequently cryptographic keys can be changed on the encoding/encryption side of the process. However, the VOD server and/or the set-top box may operate in real-time. VOD server limitations on how frequently ECMs can be multiplexed into the VOD stream to the set-top box set a first upper limit on key change frequency. The rate at which the set-top box can switch encryption keys as a part of its decryption process sets a second upper limit. The maximum rate at which cryptographic keys can be changed is determined by the smaller of these two upper limits.

The inventive technique for implementing rapid cryptographic key changes uses any of four different basic schemes (techniques, methodologies) for breaking up (subdividing, segmenting, sectioning) the content to be encoded/encrypted into a plurality of "crypto periods", covered by different cryptographic keys. These are:
1) Fixed crypto period: Define a crypto time interval and change the key each time the crypto time-interval passes.
2) Fixed number of packets: Determine a number of content packets "n" corresponding to a suitable time interval and change the cryptographic key every "n" packets.
3) Fixed "marker" count: Using a suitable MPEG-II field type as a "marker", such as an I-frame header, change the cryptographic key every time "n" markers have passed in the stream, where "n" is selected to produce a suitable crypto period. The MPEG-II I-frame header is one example of a suitable "marker." Alternatively, any other suitable, recurring MPEG-II encoding element could be used as a stream "marker" to delimit segments of the MPEG-II stream.
4) Random crypto period: Change the crypto-period randomly within upper and lower constraints on crypto period, using a pseudo-random algorithm. Calculate a number of packets for each crypto period and change the key after that number of packets. Generate an index file indicating at which packet numbers the encryption key should be changed. It is noted that instead of using a packet count to define each crypto period, a time interval could be used.

For the sake of ensuring clarity of the terminology used herein, to "encode" does not necessarily mean to "encrypt." All encryption is encoding, of a sort. The conversion to MPEG is an encoding process. The process of securing with cryptographic keys is encryption. Both encoding and encryption are performed on the program content. The data stream which is segmented, and for which keys are changing, is essentially the encrypted (e.g., by 116) data stream, which has previously been encoded (e.g., by 114).

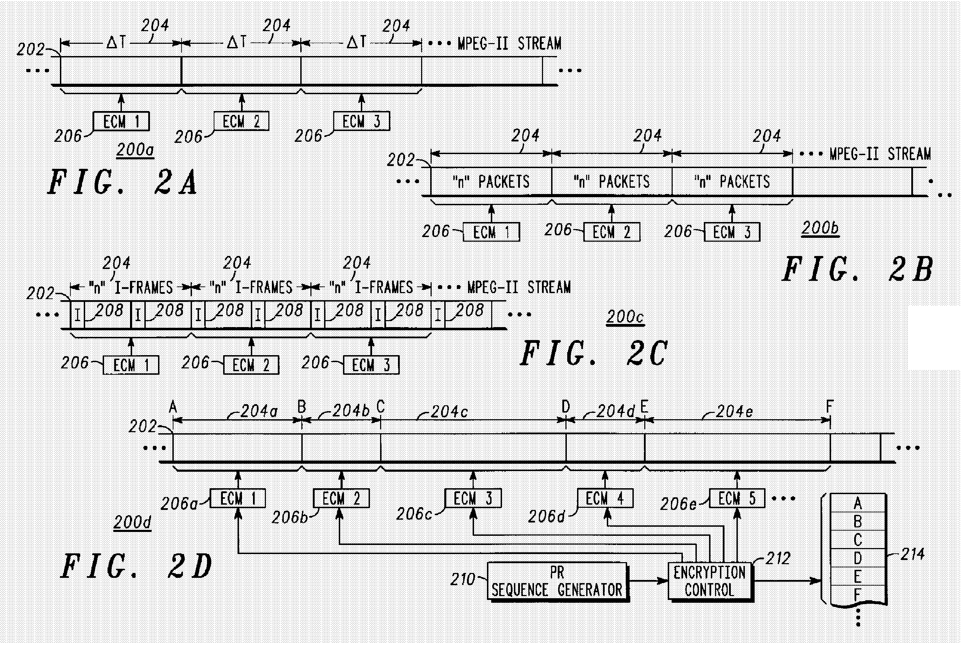

**Figures 2A-2D** illustrate these four schemes for breaking up the content to be encoded/encrypted into a plurality "crypto periods."

### Fixed crypto period

Under this encoding/encryption scheme, the encoding system picks (selects) a suitable time interval (crypto period) consistent with the known performance limitations of elements of the VOD delivery and playback infrastructure. Assuming MPEG-II encoding, the encoding/encryption system can use the PCR (Program Clock Reference) headers embedded in an MPEG-II stream of an item of program content to determine the exact amount of program time that has passed at any point in the stream. An initial cryptographic key is generated and encryption of the stream begins with the initial key. When analysis of the PCR information in the MPEG-II stream indicates that the crypto period has passed, a new key is generated and encryption resumes at the next MPEG-II "packet" using the new key. This new key is used until the PCR information once again indicates that the crypto period has passed since the key was changed, and the process repeats until the end of the stream, generating a new encryption key for each subsequent segment of the stream equivalent to a crypto period of program time. Each encryption key is saved for encoding into a set of ECMs for the encoded/encrypted program content. Alternatively, ECMs may be generated and saved as content is encrypted. The ECM set is provided to the VOD reseller (e.g., MSO) upon completion of licensing/authorization of rights to the program content. An encryption record (ER) is also generated, describing the scheme by which the program content was encoded/encrypted and the number of associated ECMs. In another approach, the ERS can take the original ECM set and "retrofit" (i.e., modify) it for each VOD reseller's conditional access system. The ER conveys information which permits such an implementation.

**Figure 2A** illustrates this fixed crypto period encoding scheme 200a, showing an encoded/encrypted MPEG-II stream 202, divided into a plurality of segments 204. Each segment corresponds to a series of MPEG-II packets covered by a crypto period defined by a fixed time interval ΔT. Each segment 204 is encrypted according to a different encryption key, used to generate an ECM 206 associated with each separately encrypted crypto period. The ECMs 206 are maintained separately from the encrypted MPEG-II stream 202.

### Fixed number of packets

In a manner similar to that of the fixed crypto period scheme, this scheme initially determines a suitable crypto period. However, unlike the fixed crypto period scheme, the "fixed number of packets" scheme then examines the encoding of the MPEG-II stream for an item of program content to determine a suitable number "n" of MPEG-II packets which correspond to a crypto period. A sufficient extra number of packets in "n" is allowed to account for any variability inherent to MPEG-II encoding and to ensure that no MPEG-II segment of "n" packets will exceed the VOD distribution/playback system's key processing capabilities. It should be appreciated that the streaming content being encrypted comprises a sequence of packets. An initial key is chosen, and encryption of the MPEG-II stream begins, changing the key after each "n" MPEG-II packets in the stream. The number of packets per time interval can vary dramatically.

As in the fixed crypto period scheme, the encryption key for each "n" packets is saved for encoding into a set of ECMs (ECM1, ECM2 ...) for the encoded/encrypted program content. Alternatively, as noted above, the ECMs can be generated (e.g., in real time) and saved as content is encrypted. The ECM set is provided to the VOD reseller (e.g., MSO) upon completion of licensing/authorization of rights to the program content, and an encryption record (ER) is also generated, describing the scheme by which the program content was encoded/encrypted and the number of associated ECMs. As previously indicated, the ERS could take the original ECM set and modify it for each VOD reseller's CAS.

**Figure 2B** illustrates an encoding scheme 200b that uses a fixed number of MPEG-II packets per crypto interval. An encoded/encrypted MPEG-II stream 202 is divided into segments of "n" MPEG-II packets each, where "n" represents the number of MPEG-II packets that correspond to a suitable period of program time to be used as a crypto period. Each segment 204 is encrypted according to a different encryption key, used to generate an ECM 206 associated with each separately encrypted crypto period. The ECMs 206 are maintained separately from the encrypted MPEG-II stream 202.

### Fixed "marker" count

In this scheme, using a suitable, recurring element of MPEG-II encoding as a stream segment delimiter (marker), a number "n" of stream segments is determined that correspond to a suitable crypto period. The stream is then encrypted in "crypto segments" defined by "n" markers. The markers can optionally be transmitted "in the clear", (i.e., unencrypted) to facilitate decoding/decryption. Each crypto segment is encrypted using a different cryptographic key.

In a manner like that of the "fixed number of packets" scheme, the encryption key for each "n" packets is saved (or generated and then saved) for encoding into a set of ECMs for the encoded/encrypted program content. The ECM set is provided to the VOD reseller (e.g., MSO) upon completion of licensing/authorization of rights to the program content, and an encryption record (ER) is also generated, describing the scheme by which the program content was encoded/encrypted and the number of associated ECMs.

**Figure 2C** illustrates an encoding scheme 200c that uses MPEG-II "markers" 208 to delimit crypto intervals in the MPEG-II stream. An encoded/encrypted MPEG-II stream 202 is divided into a plurality of segments 204 delimited by a number "n" of "markers" 208. Each segment corresponds to a series of MPEG-II packets delimited by "n" markers 208 ("n" = 2 in the figure). A marker 208 can be any suitable recurring element of MPEG-II encoding, such as an I-frame header (shown in the Figure, as "I"). The number "n" is chosen such that each segment corresponds roughly to a suitable amount of program time for a crypto period. The markers 208 are transmitted "in the clear" to facilitate their identification during the decoding/decryption process. Each segment 204 is encrypted according to a different encryption key, used to generate an ECM 206 associated with each separately encrypted crypto period. The ECMs 206 are maintained separately from the encrypted MPEG-II stream 202.

### "Random" crypto period

Using this scheme, suitable upper and lower limits are selected for crypto periods within the performance limits of the VOD distribution/playback system. The MPEG-II stream encoding scheme for the program content to be encrypted is then examined to determine a minimum number "x" and a maximum number "y" of MPEG-II packets corresponding to the selected upper and lower limits on crypto periods. Using a pseudo-random algorithm, an initial packet count "n" between "x" and "y" (inclusive) is determined. An initial key is chosen and encryption of the stream begins. When "n" stream packets have been encrypted, the pseudo-random algorithm is used to select a new value for "n." A new key is generated, and encryption resumes until the new number "n" of packets has been encrypted. The process repeats, generating a new packet count and a new key for each encrypted segment (crypto interval) of the stream. As each segment is encrypted, an index number is stored indicating the packet at which the segment begins, and the encryption key is saved (or ECMs are generated and then saved). An index file of all of the index numbers is generated and saved so that the VOD server knows when to insert ECMs. Decryption depends on packet marking and the ECMs. The index numbers can be packet numbers within the MPEG-II stream, packet counts or byte counts associated with each separately encrypted segment, or any other index number suitable for use by a multiplexing engine in determining which MPEG-II packets are associated with each separately encrypted segment.

As with the other schemes, the encryption key for each encrypted segment is saved for encoding into a set of ECMs for the encoded/encrypted program content. Alternatively, as in the other schemes discussed above, ECMs may be generated and saved as content is encrypted. The ECM set is provided to the VOD reseller (e.g., MSO) upon completion of licensing/authorization of rights to the program content, and an encryption record (ER) is also generated, describing the scheme by which the program content was encoded/encrypted and the number of associated ECMs. The ERS could alternatively take the original ECM set and "retrofit" (i.e., modify) it for each VOD reseller's conditional access system. As previously indicated, the ER conveys information which permits such an implementation.

**Figure 2D** illustrates a random crypto interval coding scheme 200d. An encoded/encrypted MPEG-II stream 202 is divided into a plurality of randomly-sized segments 204a, 204b, 204c, 204d, 204e, etc. Each segment corresponds to a number of MPEG-II packets (specific to that segment) derived using a pseudo-random sequence generator 210. A new packet count is determined for each segment, and is used in an encryption control mechanism 212, which generates a new key and index number ("A", "B", "C", "D", "E", "F", etc.) for each segment. Each segment 204'x' is encrypted according to the new encryption key, which is in turn used to generate an ECM 206a, 206b, 206c, 206d, 206e, 206f... associated with each separately encrypted segment 204a, 204b, 204c, 204d, 204e, 204f... The ECMs 206'x' are maintained separately from the encrypted MPEG-II stream 202. The index numbers ("A", "B", "C", "D", "E", "F", etc.) are stored in an index file 214, which is used to facilitate decoding by identifying which packets are associated with each ECM.

Although shown and described hereinabove in terms of MPEG-II encoding, it should be understood by those of ordinary skill in the art that the inventive technique is readily adaptable to other forms of encoding by making the necessary adaptations, substituting features of alternate video timing/synchronization and encoding elements as appropriate. Moreover, the various techniques described above can be combined. It is fully within the spirit and scope of the invention to do so, and the description presented hereinabove is intended to be illustrative, rather than limiting.

Information about the encoding of the program content (encoded/encrypted as described hereinabove) is conveyed to an ERS (ECM Renewal System) in a few separate pieces. First, the encoded/encrypted program content is maintained separately from any information about its encoding and encryption. Second, all of the encryption keys used to encrypt the program content (or the ECMs) are stored in the sequential order that they were used to encrypt the program content. Third, an encryption record defining the encoding/encryption method and other relevant encoding/encryption parameters is generated, stored and associated with the program content. In the case of random crypto period encoding, the associated index file (214) is also stored. Other implementations are also possible.

When a VOD "reseller", (e.g., MSO, satellite TV operator) successfully executes a licensing agreement for an item of program content via an ERS system, the ERS system transmits the encoded/encrypted program content to the reseller via any suitable (e.g., broadband) distribution means (e.g., satellite, cable or Internet link) for storage on a VOD server at the reseller's location. A set of ECMs (one-to-one correspondence with encryption keys, in sequential order, or a known permutation thereof) is generated and transmitted to the reseller, and the encryption record (ER) (or an encoded equivalent thereof) defining essential portions of the encryption/encoding technique used to encode/encrypt the program content is transmitted to the reseller. In the case of random crypto period encoding, the index file (214) is also transmitted, either separately or embedded into one or more of the other items (e.g., ECMs, ER) which are transmitted to the reseller.

It should be appreciated that content does not have to go through the ERS, although it can. The ER could be sent by the VOD reseller (e.g., MSO) to the ERS to identify the content. The ERS can then generate the ECMs and send them back.

For example, for the fixed methods of encoding (fixed period, fixed packet count, or fixed marker count), a field can be added to the ER defining the number of ECMs associated with the encryption/encoding process. For fixed marker count encoding, an ER field or fields defining the marker type can also be added where different types of markers might be employed in encoding/encrypting different program content. For (pseudo)random crypto period encoding, an ER field indicating the number of ECMs and an ER field, or set of ER fields containing the entire index file (or encoded equivalent thereof), can be added.

Referring again briefly to **Figure 1,** the VOD server 134 receives and stores the program content. The VOD server 134 also receives the set of ECMs and ER associated with the program content from the system manager 136. When an end-user requests and receives authorization to receive a VOD transmission of the program content (e.g., via the end-user's set-top box 150 and the user authorization system 138), the VOD server multiplexes the ECMs and the encoded/encrypted program content as defined by the ER into a stream and transmits it to the end user's VOD playback device (e.g., set-top box 150). The user authorization system generates an EMM containing license authorizations and additional information (key, encoding parameters, etc.) necessary to decode/decrypt the program content and transmits it to the user's VOD playback device 150. The VOD playback device 150 then has all of the elements necessary to decode, decrypt and display the program content, and proceeds to do so.

Alternatively, the ECM Renewal System (ERS) can generate a "template" of one set of ECMs that can be used to decrypt the program content. In this case, the VOD server would be instructed how to take this template and make corresponding ECMs for each crypto period. The method used to determine when to move from one encoded/encrypted segment to the next would be substantially the same as described hereinabove.

For (pseudo) random crypto period encoding, the VOD server retains the index file from the encryption record, and uses it to determine at what point in the stream to insert (multiplex in) the next ECM according to the index numbers stored therein.

Although the invention has been described in connection with various specific embodiments, those skilled in the art will appreciate that numerous adaptations and modifications may be made thereto without departing from the spirit and scope of the invention as set forth in the claims.

## Claims

1. A method for pre-encrypting material with a cryptographic key comprising:
encoding the material into digital form, encrypting the resulting encoded material, and transmitting the encrypted material over a transmission medium; and
in the process of encrypting the encoded material, segmenting the encoded material into a plurality of segments, and using different cryptographic keys for different segments.

2. The method of claim 1, further comprising:
controlling the encrypting of the material by selecting permission of encryption only if valid licensing exists.

3. The method of claim 1 or claim 2 wherein:
the transmission medium is at least one of a satellite, the Internet, an intranet, and cable network.

4. A method of communication of encrypted information which includes the method of claim 1, claim 2 or claim 3 and further includes:
at a receiver, receiving the encrypted material and storing it in a server from which it can be re-transmitted to end-users; and
at the receiver, controlling operation of a reseller's various transmission and communications resources.

5. The method of claim 4, further comprising:
generating a personalized encryption for each of a plurality of destination content resellers.

6. The method of claim 4 or claim 5, wherein:
at least one of the resellers is a Multiple System Operator (MSO).

7. The method of any one preceding claim, wherein:
the material comprises at least one of movies, data, audio, and other program content.

8. The method of any one preceding claim, wherein:
the encoding is according to the MPEG-II standard.

9. The method of any one preceding claim, further comprising:
generating an Entitlement Control Message (ECM) comprising encryption information specific to the material which, in combination with a valid Entitlement Management Message (EMM), can be used to derive an encryption key for decoding the encrypted material; and
multiplexing the ECM within the encrypted material.

10. The method of claim 1, wherein,
the material comprises video on demand (VOD) content.

11. A method according to claim 1 for encrypting streaming content, the method comprising:
changing cryptographic keys at a plurality of points within the content.

12. The method of claim 11, further comprising:
determining a number of sets of cryptographic keys that should be employed to encrypt one item of content, and determining an upper limit of how frequently keys can be changed.

13. The method of claim 11 or claim 12, further comprising:
determining how and where, within the content, to effect the cryptographic key changes.

14. The method of claim 11, claim 12 or claim 13 and further comprising:
determining how to communicate the cryptographic key sets to VOD servers.

15. The method of any one of claims 11 to 14, further comprising:
determining how to synchronize cryptographic key changes with corresponding entitlement control messages (ECMs) at a time when content is streamed to a consumer.

16. The method of any one of claims 11 to 15, further comprising:
determining how to handle an ECM renewal process.

17. The method of any one of claims 11 to 16, further comprising:
defining a cryptographic key change methodology that permits rapid key changes with straightforward, simple key change synchronization at the time of decryption.

18. The method of any one of claims 11 to 17, further comprising:
maintaining all cryptographic keys separate from the encrypted content.

19. The method of claims 11 to 18, further comprising:
multiplexing a set of Entitlement Control Messages (ECMs) conveying information about a set of keys into the stream when delivering the encrypted content.

20. The method of any one of claims 11 to 19, further comprising:
delivering a separate Entitlement Management Message (EMM) from an authorization system.

21. A method according to any one preceding claim including encrypting streaming content, comprising:
segmenting the content into a plurality of crypto periods; and
encrypting the content for each crypto period with a different cryptographic key.

22. The method of claim 21, wherein:
the crypto period comprises a fixed time interval; and
further comprising:
changing the cryptographic key each time the time interval passes.

23. The method of claim 22, further comprising:
generating an Entitlement Control Message (ECM) for each separately encrypted crypto period; and
maintaining the ECMs separately from the encrypted streaming content.

24. The method of claim 21, further comprising:
using Program Clock Reference (PCR) headers embedded in an MPEG-II stream of an item of program content to determine the amount of time that has passed at any point in the stream.

25. The method of claim 24, further comprising:
beginning the encryption by generating an initial cryptographic key, and when analysis of the PCR information in the MPEG-II stream indicates that the crypto period has passed, generating a new key and resuming encryption at the next MPEG-II packet using the new key;
using the new key until the PCR information once again indicates that the crypto period has passed since the key was changed; and
repeating the process until the end of the stream

26. The method of claim 21, wherein:
the streaming content is embodied in a sequence of packets; and
the crypto period comprises a fixed number of content packets.

27. The method of claim 26, further comprising:
allowing a sufficient number of packets to account for any variability inherent to the encoding procedure and to ensure that no segment of "n" packets will exceed a distribution/playback system's key processing capabilities.

28. The method of claim 26, further comprising:
choosing an initial key and beginning encryption of the streaming content; and
changing the key after each fixed number of packets in the streaming content.

29. The method of claim 26, further comprising:
saving information about the encryption key for each of a plurality of content packets into a set of Entitlement Control Messages (ECMs) for the encrypted content.

30. The method of claim 29, further comprising:
providing an ECM set to a reseller upon completion of licensing/authorization of rights to the content; and
generating an encryption record (ER), describing the scheme by which the content was encrypted and the number of associated ECMs.

31. The method of claim 21, wherein the crypto period comprises a number of packets separated by at least one recurring marker.

32. The method of claim 31, wherein:
the recurring marker is an 1-frame header; and
further comprising:
changing the cryptographic key every time n I-frames pass, where n≥1.

33. The method of claim 21, wherein:
the crypto period comprises a variable number of packets in the streaming content.

34. The method of claim 33, further comprising:
establishing upper and lower constraints on the crypto period;
changing the crypto-period randomly within the upper and lower constraints using a pseudo-random algorithm;
calculating a number of packets for each crypto period and changing the key after that number of packets; and
generating an index file indicating at which packet numbers the encryption key should be changed.

35. The method of claim 34, further comprising:
selecting the upper and lower constraints for crypto periods within the performance limits of a distribution/playback system.

36. The method of claim 34 or claim 35, further comprising:
choosing an initial key and beginning encryption of the stream;
when a number of packets have been encrypted, using the pseudo-random algorithm to select a new value for the number of packets to be encrypted by a new key;
generating the new key, and resuming encryption until the new number of packets has been encrypted; and
repeating the process, generating a new packet count and a new key for segments of the streaming content.

37. The method of claim 3 6, comprising:
as each segment is encrypted, storing an index number indicating the packet at which the segment begins, and saving information about the encryption key; and
generating an index file of all of the index numbers so that a multiplexing process can determine the points within the stream where the encryption keys were changed to synchronize insertion of corresponding ECMs..

38. The method of clam 37, wherein:
the index numbers are selected from packet numbers within the streaming content, packet counts associated with each separately encrypted segment, or any other index number suitable for use by a multiplexing engine in determining which packets are associated with each separately encrypted segment.

39. The method of any one of claims 21 to 38, further comprising:
generating an Entitlement Control Message (ECM) for each separately encrypted crypto period; and
maintaining the ECMs separately from the encrypted streaming content.

40. The method of any one of claims 21 to 39, further comprising:
saving information about the encryption key for each encrypted segment; and
encoding the encryption keys into a set of Entitlement Control Messages (ECMs).

41. The method of any one of claims 21 to 40, further comprising:
selecting a crypto period consistent with the known performance limitations of elements of a VOD delivery and playback infrastructure.

42. The method of any one of claims 21 to 41, further comprising:
maintaining the encrypted content separately from any information about its encoding and encryption.

43. The method of any one of claims 21 to 38, further comprising:
storing information about all of the encryption keys used to encrypt the program content in a sequential order in which they were used to encrypt the program content.

44. The method of any one of claims 21 to 38, further comprising:
generating an encryption record defining the encryption method and other relevant encryption parameters;
storing the encryption record; and
associating the encryption record with the streaming content.

45. A system for delivery of pre-encrypted program content comprising;
means for encoding the program content into digital form;
means for encrypting the encoded content; and
means for segmenting the encoded content into a plurality of segments, and using a different cryptographic key for encrypting each segment.

46. The system of claim 45, further comprising:
managing the encrypting of the content by permitting encryption only if valid licensing exists.

47. The system of claim 45, further comprising:
means for transmitting the encrypted content to a receiver.

48. The system of claim 47 further comprising:
a receiver for receipt of the encrypted program content including means for receiving the encrypted content and storing it in a server from which it can be re-transmitted to end-users.

49. The system of claim 48 further comprising:
at the receiver, means for requesting program content, for receiving encryption records defining how the requested program content is encrypted, and for receiving Entitlement Control messages (ECMs) associated with the encryption of the program content.

50. The system of claim 48 or claim 49 further comprising:
at the receiver, means for receiving requests from end users for program content, and for verifying that appropriate authorizations are in place for the end user to view the requested content.

51. The system of claim 50, further comprising:
means for delivering the requested, encrypted content to the end user's VOD playback device and for generating an Entitlement Management Message (EMM) for the requested content for delivery to the VOD playback device.

52. The system of any one of claims 45 to 51, wherein each segment represents a crypto period, and the means for encrypting comprises means for changing the cryptographic key each time the time interval passes.

53. The system of claim 45, wherein each segment represents a fixed number of content packets, and the means for encrypting comprises means for changing the cryptographic key for each of a plurality of the fixed number of content packets.

54. The system of claim 45, wherein each segment represents a crypto period, and the means for encrypting comprises means for changing the cryptographic key for each of a number of packets separated by at least one recurring marker.

55. The system of claim 45, wherein each segment represents a variable number of content packets, and the means for encrypting comprises means for changing the cryptographic key for each of a plurality of the variable number of content packets.
